# EUROPÄISCHE PATENTANMELDUNG

(11) **EP 1 690 587 A2**
(43) Veröffentlichungstag der Anmeldung: **16.08.2006**
(21) Anmeldenummer: 06002000.5
(22) Anmeldetag: 31.01.2006
(51) Int. Cl.: B01D 53/75, B01D 53/86, B01D 53/14

(54) **Verfahren und Vorrichtung zur Reinigung von Gasströmen**

(30) Priorität: 11.02.2005 DE 102005006538; 25.02.2005 DE 102005009216; 22.03.2005 DE 102005013276
(71) Anmelder: Linde Aktiengesellschaft, 65189 Wiesbaden (DE)
(72) Erfinder: Bölt, Heinz, 82515 Wolfratshausen (DE); Gutmann, Manfred, Prof. Dr., 13051 Berlin (DE); Häring, Heinz-Wolfgang, Dr., 81479 München (DE); Walzl, Roland, 82340 Feldafing (DE); Wenning, Ulrike, Dr., 82049 Pullach (DE)

(57) **Zusammenfassung**

Die Erfindung betrifft ein Verfahren zur Reinigung eines olefinhaltigen Gasstromes, insbesondere eines olefinhaltigen Restgasstromes aus einer petrochemischen Anlage oder einer Raffinerie, vor seiner Einleitung in einen Zerlegungsteil zur Gewinnung von einem oder mehreren Olefinprodukten sowie eine Vorrichtung zur Durchführung des Verfahrens. Bei der Reinigung werden Sauergase, Katalysatorgifte, Stickoxide, Wasser, Wasserstoff und Methan in unterschiedlichen Reinigungsschritten entfernt, wobei die Stickoxide bevorzugt auf katalytischem Wege umgesetzt werden.

## Beschreibung

Die Erfindung betrifft ein Verfahren und eine Vorrichtung zur Reinigung eines olefinhaltigen Gasstromes.

Raffinerierestgase, wie sie z. B. in sog. FCC-Anlagen entstehen, in welchen langkettige Kohlenwasserstoffe in einem fluidisierten Katalysatorbett gespalten werden, enthalten Olefine in Konzentrationen, die eine Gewinnung dieser Olefine unter wirtschaftlichen Gesichtspunkten sinnvoll machen. Zu diesem Zweck werden diese Raffinerierestgase entweder in eigenen Anlagen weiterbehandelt oder in die Zerlegungseinheit einer bereits bestehenden Olefinanlage (z. B. eines Steamcrackers) eingespeist.

Die Restgase enthalten eine Reihe von unerwünschten Stoffen, wie Stickoxide (NO, NO₂, N₂O₂, N₂O₃, N₂O₄, im folgenden mit NOₓ abgekürzt), Sauergase (CO₂, H₂S), Ammoniak (NH₃), Nitrile (RCN), Blausäure (HCN), Carbonylsulfid (COS), Arsenwasserstoff (AsH₃), Phoshpor- und Antimonwasserstoff (PH₃, SbH₃), sonstige Arsen-, Phosphor- oder Antimonverbindungen, Quecksilber (Hg), Acetylene, Diene, Sauerstoff (O₂), Wasser (H₂O), Kohlenmonoxid (CO), Halogene/Halogenverbindungen, Schwermetalle und andere Schwefelverbindungen (RSH, RSR, SOₓ etc.), die vor dem Eintritt der Restgase in die Zerlegungseinheit entfernt werden müssen, da sie zu einer Verunreinigung der Endprodukte führen, den Betriebsablauf stören (z. B. durch die Vergiftung von Katalysatoren) oder die Sicherheit der Anlage beeinträchtigen können.

Stickoxide in Olefinanlagen stellen ein großes Sicherheitsrisiko dar, selbst wenn sie nur in geringsten Spuren in den zu behandelnden Gasströmen vorhanden sind. Bei den tiefen Temperaturen, wie sie in kryogenen Teilen einer Zerlegungseinheit zur Trennung von Olefinen, wie sie Stand der Technik sind, herrschen, kann NO mit Sauerstoff zu NO₂ reagieren. NO und/oder NO₂ bilden ihrerseits mit bestimmten Kohlenwasserstoffen (z. B. Dienen) und/oder mit Ammoniak instabile, explosive nitrose Harze und Salze, welche sich in der kryogenen Zerlegungseinheit im Laufe der Zeit zu kritischen Mengen anreichern können. In der Vergangenheit führten diese Stoffe schon zu schweren Unfällen (z. B. Cold-Box-Explosion am Steamcracker der Shell in Berre, Frankreich, 1990: Jacques Kohler: "Cold Box Explosion at Shell Steam Cracker in Berre, France", AlChE Spring National Meeting, Houston, Texas, April 7-11, 1991).

Besteht der Verdacht, dass sich Stickoxide im Stoffstrom zu kryogenen Teilen einer Zerlegungseinheit befinden, werden die Anlagen bisher aus Sicherheitsgründen nach einer gewissen Laufzeit prophylaktisch abgeschaltet, angewärmt und ausgewaschen, noch bevor sich eine kritische Menge an nitrosen Harzen und Salzen bilden kann. Wegen der durchzuführenden Reinigungsarbeiten und des Produktionsausfalls stellt diese Prozedur einen erheblichen Kostenfaktor dar. Es besteht daher ein großes Interesse daran, über eine Technik zu verfügen, die es ermöglicht, das NOₓ aus olefinhaltigen Gasströmen möglichst vollständig zu entfernen, bevor sie in die kryogenen Teile einer Zerlegungseinheit eintreten.

Zur Entfernung von NOₓ aus olefinhaltigen Gasströmen sind Katalysatoren bekannt, die sich zur selektiven NOₓ-Entfemung aus olefinhaltigen Gasströmen eignen, d. h. ohne Olefine mitzuhydrieren. Diese Katalysatoren sind in der Lage, zudem gewisse Störkomponenten mit zu entfernen. In den Veröffentlichungen Margaret M. Shreehan, ABB Lummus Global Inc.: "Recovery of Olefins from Refinery Offgases", PTQ Autumn 1998, 45-51 und Richard W. Voight, Steve A. Blankenship, Jennifer A. Perkins, Süd-Chemie Inc.: "Process for the Recovery of Light Olefins from Refinery Off-gas", 3rd Ethylene Conference, The 3^{rd} Asian Ethylene Symposium, Yokohama, Japan, October 4-6, 2000, werden Nickel-Katalysatoren beschrieben, die in ihrem sulfidierten Zustand über eine entsprechende Aktivität und Selektivität zur NOₓ-Entfernung verfügen. Mit diesen Katalysatoren ist gleichzeitig auch die Beseitigung einiger Verunreinigungen aus dem Gasstroms möglich, wie z. B. Acetylen durch Hydrierung zu Ethylen.

Problematisch beim Einsatz dieser Katalysatoren ist, dass Aktivität und Selektivität vom Schwefelwasserstoffgehalt oder vom Gehalt anderer Gaskomponenten abhängen. Ein zu hoher Gehalt an z.B. Schwefelwasserstoff kann eine Katalysatorvergiftung bewirken; bei einem zu niedrigen Gehalt kann die Aktivität steigen und/oder die Selektivität verloren gehen und als Folge die Olefinhydrierung anspringen. Durch eine einsetzende Olefinhydrierung würde einerseits zu gewinnendes Produkt verloren gehen, z. B. Ethylen und/oder Propylen, andererseits birgt dies ein Sicherheitsrisiko, da die damit verbundene Wärmefreisetzung zu einem "Durchgehen" der Reaktion und ggf. zu einer Explosion führen kann.

Um die Reinigungsintervalle der Anlage erheblich zu verlängern und damit die Betriebskosten zu reduzieren, ohne die Sicherheit zu gefährden, ist zudem die Kenntnis der Menge an eingetragenem NOₓ erforderlich. Es ist daher unumgänglich, auch über eine Möglichkeit zu verfügen, die NOₓ-Konzentrationen in olefinhaltigen Gasströmen bis hinab in den unteren ppb-Bereich sicher zu messen. Nur so ist es möglich, die Wirksamkeit der Gasreinigung zu überwachen und den NOₓ-Eintrag in die kryogenen Teile der Anlage bilanzieren zu können. Die Spurenanalytik von Stickoxiden in olefinhaltigen Gasen ist jedoch problematisch. Kürzlich wurde von einigen Erfindern dieser Anmeldung ein Messverfahren zum quantitativen Nachweis von NO in olefinreichen Gasen ausgearbeitet, das mit dem Aktenzeichen 102004055120.0 beim Deutschen Patent- und Markenamt angemeldet wurde. Der Inhalt dieser Anmeldung wird durch Bezugnahme hier aufgenommen.

Der Erfindung liegt daher die Aufgabe zugrunde, ein Verfahren der eingangs genannten Art sowie eine Vorrichtung zur Durchführung des Verfahrens so auszugestalten, dass auf wirtschaftliche Weise aus olefinhaltigen Gasströmen, insbesondere aus olefinhaltigen Restgasströme von Raffinerien und/oder petrochemischen Anlagen, mit Hilfe bereits existierender meist kryogener Techniken zur Olefintrennung ein oder mehrere Olefinprodukte mit hoher Reinheit gewonnen werden können, ohne das die Betriebsabläufe negativ beeinflusst werden und/oder die Sicherheit der Anlage gefährdet wird. Die Verfahrensführung wird so gestaltet, dass sie eine optimale NOₓ-Entfernung ermöglicht.

Die oben genannte Aufgabe wird durch ein Verfahren nach Anspruch 1 und einer Vorrichtung nach Anspruch 12 gelöst. Die Unteransprüche beziehen sich auf weitere vorteilhafte Aspekte der Erfindung.

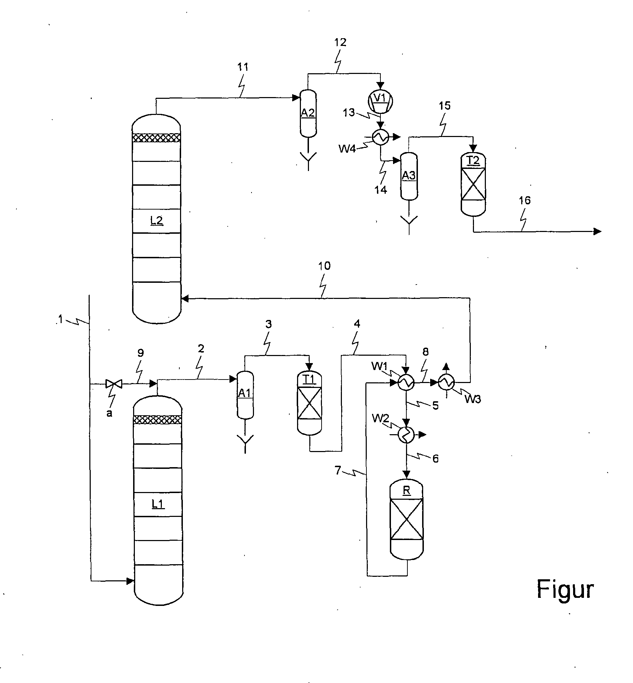

Die Figur zeigt die schematische Darstellung eines Ausführungsbeispiels der erfindungsgemäßen Vorrichtung zur Durchführung des Verfahrens. Im nachfolgenden wird die Erfindung detailliert anhand dieses Ausführungsbeispiels beschrieben.

Das vorliegende Ausführungsbeispiel betrifft eine Anlage zur Reinigung eines olefinhaltigen Gasstromes, der in den Zerlegungsteil einer Olefinanlage eingespeist wird.

Der olefinhaltige Gasstrom wird über eine Leitung 1 einem Sauergaswäscher L1 zugeführt, in welchem der Gehalt an Sauergasen, vor allem durch die Entfernung von Schwefelwasserstoff und Kohlendioxid, verringert wird. Über eine Leitung 2 verlässt der olefinhaltige Gasstrom den Sauergaswäscher L1, wird in einem Abscheider A1 von mitgerissenen Tröpfchen befreit und in einem Trockner T1, dem der Gasstrom über eine Leitung 3 zugeführt wird, getrocknet. Über eine Leitung 4 gelangt der Gasstrom zu einem ersten Wärmetauscher W1 und anschließend über eine Leitung 5 zu einem zweiten Wärmetauscher W2, wo er mittels heißen Wasserdampfes auf eine, für die nachfolgende Stickoxidentfernung günstige Temperatur gebracht wird, bevor er über eine Leitung 6 in eine katalytische Stufe zur Stickoxidentfemung R eintritt.

In R befindet sich zumindest ein Katalysator, der zur NOₓ-Umsetzung geeignet ist. In dem Ausführungsbeispiel wird hierzu der eingangs erwähnte sulfidierte NickelKatalysator der Süd-Chemie "C-36-2-02" verwendet. Dieser Katalysator wird in einem vorbereitenden Schritt gemäß den Anweisungen von Süd-Chemie ("C36: Product Bulletin", United Catalysts Inc., A Süd-Chemie Company) sulfidiert.

Der in R eingesetzte Katalysator bewirkt nicht nur eine Umwandlung der Stickoxide, sondern auch die Hydrierung von Acetylenen, Dienen und Sauerstoff sowie die Adsorption einiger Katalysatorgifte wie AsH₃. Der Gasstrom verlässt R über eine Leitung 7 und gibt im Wärmetauscher W1 einen Teil seiner Wärme an das der Stickoxidentfernung R zuströmende Gas ab. Über eine Leitung 8 gelangt es in einen Wärmetauscher W3, wo seine Temperatur mittels Kühlwasser weiter verringert wird.

Nach der Abkühlung in W3 gelangt der olefinhaltige Gasstrom über eine Leitung 10 zu einem zweiten Sauergaswäscher L2, in welchem die verbliebenen Sauergase ausgewaschen werden. Um mitgerissene Flüssigkeit aus dem Gastrom zu entfernen, wird dieser über eine Leitung 11 einem Abscheider A2 zugeführt und anschließend in einem Verdichter V1, den das Gas über eine Leitung 12 erreicht, auf den erforderlichen Druck verdichtet. Der durch die Verdichtung erwärmte Gasstrom wird über Leitung 13 dem Wärmetauscher W4 zugeleitet und dort abgekühlt. Infolge der Abkühlung kondensiert Wasser aus, welches im Abscheider A3, den es über Leitung 14 erreicht, vom Gasstrom abgetrennt wird, bevor dieser über Leitung 15 in die Trocknungsstation T2 eingeleitet. In T2 werden Wasser und evtl. noch verblieben Reste an CO₂ aus dem Gasstrom entfernt.

Anschließend wird das Gas über Leitung 16 in eine kryogene Zerlegung der Olefinanlage direkt oder über eine Demethanisierung eingespeist. Hierfür kann jedes gängige Olefingewinnungsverfahren eingesetzt werden, wie sie dem Stand der Technik bekannt sind.

Die erste Sauergaswäsche hat die Aufgabe, die Schwefelwasserstoffkonzentration im Gasstrom auf ein Niveau zu verringern, das für den Katalysator unproblematisch ist. Andererseits ist sie so ausgelegt, dass genügend Schwefelwasserstoff durchgelassen wird, um den Sulfidierungszustand des Katalysators beizubehalten. Die genaue Ausgestaltung hängt in jedem Einzelfall von der Zusammensetzung des Einsatzgases ab.

Sollte es notwendig sein, zur Verbesserung der Reinigungsbedingungen der Stickoxidentfernung R den Schwefelgehalt im olefinhaltigen Gasstrom zu erhöhen, kann über eine Leitung 9 und ein Regelventil a ein Teil des Gasstroms gezielt am Sauergaswäscher L1 vorbei geführt und in Leitung 2 eingespeist werden, wo er sich mit dem aus L1 kommenden Gasstrom mischt.

Erfindungsgemäß wird demgemäß eine technologische Kopplung und optimale Sequenz zur komplexen Gasreinigung eingesetzt. Der Gehalt einer ersten Komponente wird zunächst auf einen ersten Pegel eingestellt. Danach wird NOₓ entfernt. Anschließend erfolgt die weitere Entfemung der ersten Komponente.

Beispielsweise werden in aufeinander folgenden Reinigungsschritten erste Sauergaswäsche, katalytische Reaktion, zweite Sauergaswäsche und Adsorption unerwünschte Stoffe entfernt, wobei in der ersten Sauergaswäsche z. B. der Schwefelgehalt, insbesondere der Schwefelwasserstoffgehalt (H₂S), auf einen Wert eingestellt wird, der für ein optimales Funktionieren der nachfolgenden katalytischen Reaktion sorgt, durch die katalytische Reaktion Substanzen wie Stickoxide (NOₓ), Acetylene, Diene, Sauerstoff und Kohlenmonoxid (CO) z.B. durch Hydrierung umgewandelt werden, durch die zweite Sauergaswäsche der verbliebene Schwefel bzw. H₂S aus dem Gasstrom entfernt und weitere unerwünschte Stoffe adsorptiv entfernt werden.

Eine Ausgestaltung des erfindungsgemäßen Verfahrens sieht vor, dass zur Entfernung von NOₓ der Gasstrom in einen Wäscher geleitet und dort mit einem geeigneten Waschmittel behandelt wird. Andere Ausgestaltungen sehen vor, die NOₓ-Entfernung in einem Festbett- oder einem Wirbelschicht- oder einem Wanderbettreaktor durchzuführen, wobei in dem jeweiligen Reaktor zumindest ein Adsorbens oder/und zumindest ein katalytisch wirkendes Material enthalten sind, die mit dem zu reinigenden Gasstrom in innigen Kontakt gebracht werden.

Das Gasreinigungsverfahren kann zur Stickoxidentfernung auch im Bereich kleinster NOₓ-Spuren eingesetzt werden. Die Stickoxide, insbesondere NO, können bis in den Spurenbereich, beispielsweise bis unter 1 ppb, entfernt werden.

In einer alternativen Ausführungsform wird im Gas enthaltenes Stickstoffdioxid (NO₂) in der ersten und/oder zweiten Sauergaswäsche ganz oder teilweise ausgewaschen. Die NO₂-Entfernung kann alternativ auch durch entsprechende Adsorber durchgeführt oder vervollständigt werden.

Als Einsatz können verschiedene olefinhaltige Stoffströme verwendet werden, wie z. B. Restgase, Sidestreams und Rückströme aus Raffinerien, Olefinanlagen und/oder Polyolefinanlagen, wie FCC-Restgase oder andere Gase mit Ethylen- und/oder Propylenanteil.

Als erste und/oder zweite Sauergaswäsche kann beispielsweise eine physikalische Wäsche, wie eine Amin-Wäsche, eingesetzt werden. Alternativ kann eine chemische Wäsche, z. B. eine Laugewäsche, eingesetzt werden. Als weitere alternative Ausführungsform kann die erste Wäsche eine physikalische Wäsche und die zweite eine chemische Wäsche sein; mit der regenerierbaren physikalischen werden größere Mengen oder sogar der Hauptteil der Sauergase entfernt; in der nicht regenerierbaren zweiten Wäsche können die im Gas verbliebenen geringeren Gehalte entfernt werden. Als weitere Alternative kann der Sauergaswäsche eine Adsorberstation (z. B. mit Molekularsieb) folgen, die in der Lage ist, restliche Sauergase, insbesondere CO₂, zu adsorbieren. Zum Schutz der Adsorberstation vor mitgerissenen Tröpfchen kann ein Abscheider zwischen Laugewäsche und Adsorber eingebaut werden. Der Adsorber kann gleichzeitig als Gastrockner dienen.

Eine alternative Ausführungsform sieht eine Gastrocknung, z. B. den Einbau einer Molekularsiebstation, nach Austritt aus der ersten Wäsche vor Eintritt in den Katalysator vor.

Adsorber- und/oder Trocknerstationen werden in einer alternativen Ausführungsform so aufgebaut, dass sie aus mindestens zwei parallel geschalteten Einheiten bestehen; während eine Einheit gerade zur Gasreinigung eingesetzt wird, kann die andere Einheit (bei mehr als 2 Einheiten: können die anderen Einheiten) regeneriert werden.

Dem mit unerwünschten Substanzen beladenen, olefinhaltigen Gasstrom wird, falls erforderlich, in einem ersten Reinigungsschritt zumindest ein Teil seiner Schwefelfracht entzogen. Besteht dieser Reinigungsschritt aus einer kalten, d. h. bei nahezu Umgebungstemperatur durchgeführten Sauergaswäsche, wie es eine bevorzugte Ausgestaltung des erfindungsgemäßen Verfahrens vorsieht, wird in erster Linie Schwefelwasserstoff ausgewaschen. Der Schwefelgehalt des Gasstroms wird dabei nur soweit abgesenkt, dass der "Sulfidierungsgrad" des Katalysators konstant bleibt bzw. für den Katalysator sinnvoll ist.

Um eine optimale NOₓ-Entfernung ohne Olefinhydrierung zu erreichen, kann statt der Entfernung einer ersten Komponente, wie z. B. Schwefelwasserstoff, auch der Beibehalt der im Gas vorhandenen Konzentration oder eine Zudosierung dieser Komponente erforderlich sein.

In dem der ersten Sauergaswäsche nachfolgenden Reinigungsschritt wird der Gasstrom einer katalytisch unterstützten Reaktion, z. B. einer Hydrierung, unterzogen, durch die problematische, und daher unerwünschte Stoffe in unproblematische Formen überführt werden. Der erfindungsgemäß eingesetzte Katalysator besitzt die Eigenschaft, dass seine Aktivität und Selektivität, d. h. seine Fähigkeit die Reaktion zu unterstützen, abhängig ist von z. B. der Konzentration der Schwefelkomponenten (Mercaptane, Sulfide, Disulfide, Polysulfide), insbesondere der H₂S-Konzentration, im Gasstrom. Es existiert eine optimale Schwefelkonzentration, bei welcher Aktivität und Selektivität ein Optimum erreichen. Die Lage dieser optimalen Schwefelkonzentration ist keine Konstante, sondern vielmehr eine Funktion der Bedingungen, unter denen die Reaktion durchgeführt wird und darüber hinaus auch der Zykluszeit und der Lebensdauer.

Statt mit Schwefelkomponenten kann der optimale Zustand (Aktivität/Selektivität) auch durch andere Stoffe, z. B. AsH₃, eingestellt werden. Die Sauergaswäschen sind ggf. durch entsprechend geeignete Adsorber etc. zu ersetzen oder zu ergänzen.

Ein geeignetes Kriterium zur Beurteilung von Aktivität und Selektivität des Katalysators ist die NOₓ-Konzentration im Gasstrom nach der Umsetzung. Ein anderes Kriterium ist das Ausmaß der Olefinhydrierung. Das erfindungsgemäße Verfahren sieht daher vor, dass die NOₓ-Konzentration mit einer geeigneten Messeinrichtung bestimmt und/oder die Olefinhydrierung ermittelt wird (z. B. Messung des eintretenden und austretenden Ethylens und/oder Propylens bzw. Ethans und/oder Propans) und auf Grundlage dieses Messwertes die Schwefel- bzw. Schwefelwasserstoffkonzentration oder einer anderen geeigneten Komponente im Gasstrom vor der Umsetzung und/oder anderer Parameter wie die Katalysatortemperatur gegebenenfalls geändert wird.

Eine weitere Ausgestaltung des erfindungsgemäßen Verfahrens sieht vor, neben Stickoxiden auch noch weiter Stoffe aus dem Gasstrom zu entfernen. Im Falle von Schwefel wird dieses Ziel bevorzugt durch eine, der Reaktion nachfolgende oder vorangestellte Sauergaswäsche erreicht. Andere Stoffe, wie z. B. Diene, Acetylen, Butylen oder Sauerstoff werden erfindungsgemäß durch Hydrierung umgewandelt. Bevorzugt wird zur Unterstützung dieser Hydrierungen derselbe Katalysator eingesetzt, der auch zur NOₓ-Umsetzung verwendet wird.

Andere Verunreinigungen, wie z. B. Arsenwasserstoff oder Antimonwasserstoff werden erfindungsgemäß adsorptiv aus dem Gasstrom entfernt. Eine zweckmäßige Ausgestaltung des erfindungsgemäßen Verfahrens sieht vor, diesen Reinigungsschritt in der katalytischen Stufe durchzuführen, wobei der (Hydrier)-Katalysator als Adsorptionsmittel dient. Eine andere Ausgestaltung sieht vor, dass diese Verunreinigungen in einem oder mehreren separaten Adsorbern, vor oder hinter der Zerlegungseinheit des Steamcrackers aus dem Gasstrom entfemt werden, wobei diejenigen Substanzen, die z. B. für die in der Zerlegungseinheit eingesetzten Katalysatoren als Gifte wirken, den Betrieb stören oder die Produkte verunreinigen, zweckmäßigerweise vor der Zerlegungseinheit des Steamcrackers entfernt werden.

Da Wasser und Kohlendioxid (CO₂) im kryogenen Zerlegungsteil ausfrieren und in kurzer Zeit zu Verlegungen führen würden, ist es notwendig, den olefinhaltigen Gasstrom von diesen Stoffen zu reinigen, bevor er in den kryogenen Zerlegungsteil eingeleitet wird. Eine bevorzugte Ausgestaltung des erfindungsgemäßen Verfahrens sieht vor, dass die Entfernung von Wasser adsorptiv durchgeführt wird, wozu der olefinhaltige Gasstrom durch eine, ein geeignetes Adsorptionsmittel (z. B. Molekularsieb, Aluminiumgel, Zeolith) enthaltende Adsorberstation geleitet wird. CO₂ wird bevorzugt bereits zu einem großen Teil oder vollständig in der Sauergaswäsche entfernt. Noch im Gas vorhandenes CO₂ (Spuren) kann zusammen mit dem Wasser adsorptiv entfernt werden.

Statt der oben genannten Nickelhaltigen Katalysatoren können auch andere handelsübliche Katalysatoren, die eine NOₓ-Entfemung ohne gleichzeitige nennenswerte Olefinhydrierung erlauben, eingesetzt werden. Beispielsweise können auch Edelmetallkatalysatoren verwendet werden. Zum Schutz des Katalysators können bei Bedarf sog. Guard Beds zur Entfernung von Störkomponenten, wie z. B. AsH₃, vorgeschaltet werden.

Eine weitere Ausgestaltung des erfindungsgemäßen Verfahrens sieht daher vor, die NOₓ-Konzentrationen nicht nur unmittelbar hinter der Umsetzung zu messen, sondern auch in den Stoffströmen, die aus den kryogenen Teilen der Zerlegungseinheit strömen. Auf diese Weise ist es möglich, die Menge der hochexplosiven nitrosen Harze und nitrosen Salze zu berechnen, die sich in der kryogenen Zerlegungseinheit anreichern. Die Anlage kann solange betrieben werden, bis diese Menge einen kritischen Wert erreicht, und muss nicht schon vorsorglich nach einer wesentlich kürzeren Laufzeit abgeschaltet und gereinigt werden. Durch eine NOₓ-Messung in den diversen Prozessströmen auch innerhalb des Zerlegungsteils kann ggf. eine Anreicherung von NOₓ in den betreffenden Anlagensektionen lokalisiert werden.

Olefinhaltige Gasströme, wie sie mit Hilfe des erfindungsgemäßen Verfahrens gereinigt werden sollen, enthalten üblicherweise große Mengen an Wasserstoff und Methan; z. B. kann ein typisches FCC-Restgas zu mehr als 40 mol% aus diesen beiden Stoffen bestehen. In einem Gasstrom, wie er aus dem Spaltofen einer Olefinanlage strömt, sind Wasserstoff und Methan hingegen in weit geringeren Konzentrationen vorhanden. Die Einleitung eines olefinhaltigen Restgases in eine Olefinanlage kann daher die Zusammensetzung des Gasstroms zum Zerlegungsteil der Olefinanlage so stark verändern, dass die Effektivität der Gaszerlegung negativ beeinflusst wird. Um dies zu vermeiden, sieht eine weitere Ausgestaltung des erfindungsgemäßen Verfahrens vor, dass Wasserstoff und Methan aus dem olefinhaltigen Gasstrom entfernt werden, bevor der Gasstrom in eine Olefinanlage eingespeist wird. Bevorzugt wird hierzu der olefinhaltige Gasstrom abgekühlt und einem Prozessschritt zugeführt, in welchem er in eine C₂⁺-Fraktion und ein vorwiegend aus Wasserstoff und Methan bestehendes sog. Tailgas getrennt wird. Die C₂⁺-Fraktion wird zur Olefinanlage weitergeleitet, während das Tailgas zweckmäßig einer energetischen Nutzung zugeführt wird.

Erfindungsgemäß wird der olefinhaltige Gasstrom von allen Verunreinigungen befreit, bevor er abgekühlt und entsprechend behandelt wird. Eine Ausnahme stellt z. B. AsH₃, der auch nach der (C₁⁻)-Abtrennung aus der (C₂⁺)-Fraktion entfernt werden kann.

Um zu erreichen, dass alle Anlagenteile der erfindungsgemäßen Vorrichtung ihre jeweilige Aufgabe optimal erfüllen, kann es notwendig sein, sie zu kühlen oder zu erwärmen. Zweckmäßigerweise sieht das erfindungsgemäße Verfahren vor, dass der olefinhaltige Gasstrom an geeigneten Stellen erwärmt bzw. abgekühlt wird. Wärme und Kälte können von außerhalb der Anlage, z. B. über Dampf oder Kühlwasser, zugeführt oder innerhalb der Anlage umverteilt werden. Bevorzugt werden die Erwärmungen bzw. Abkühlungen so durchgeführt, dass der Verbrauch an Wärme und Kälte minimal ist.

Die Erfindung betrifft ferner eine Vorrichtung zur Reinigung eines olefinhaltigen Gasstromes, vor dessen Einspeisung in einen Zerlegungsteil zur Gewinnung von Olefinprodukten, durch eine Kombination aus Sauergaswaschkolonnen, NOₓ₋Entfernungsstufe, Adsorber und diverser weiterer Apparate.

Vorrichtungsseitig wird diese Aufgabe erfindungsgemäß dadurch gelöst, dass beispielsweise eine erste Sauergaswaschkolonne, die katalytische Reaktionsstufe, eine zweite Sauergaswaschkolonne und die Adsorberstation(en) hintereinander angeordnet werden, wobei die erste Sauergaswaschkolonne zur Einstellung des Schwefelgehalts insbesondere des Schwefelwasserstoffgehalts des Gasstroms auf einen Wert dient, der für ein optimales Funktionieren der nachfolgenden katalytischen Reaktionsstufe sorgt, während die zweite Sauergaswaschkolonne die Aufgabe hat, die verbliebenen Schwefelkomponenten zu entfemen und die Adsorberstation(en) so ausgestaltet sind, dass noch verbliebene Verunreinigungen wie Wasser und Kohlenmonoxid aus dem Gasstrom entfernt werden.

Die erste Sauergaswaschkolonne dient dazu, den Schwefelgehalt, insbesondere den Schwefelwasserstoffgehalt, im olefinhaltigen Gasstrom zu reduzieren. Da die Höhe der Reduktion abhängig ist von der Art und Qualität des in der nachfolgenden katalytischen Stufe eingesetzten Katalysators sowie den Betriebsbedingungen, stellt sie i. Allg. keine feste Größe dar. Zweckmäßigerweise wird die erste Sauergaswaschkolonne daher so ausgebildet, dass der Schwefelgehalt des Gasstroms zur katalytischen Station einstellbar ist. Aus energetischen Gründen wird die erste Sauergaswaschkolonne bevorzugt als Kaltwaschkolonne, d. h. bei angenähert Umgebungstemperatur betrieben, ausgeführt.

Hat das Gas bereits eine für die katalytische Stufe adäquate Schwefel- bzw. Sulfidkonzentration, kann die erste Sauergaswäsche entfallen oder das Gas ganz oder teilweise im Bypass an der ersten Wäsche vorbeigeführt werden. Insbesondere bei wechselnden Zusammensetzungen des Einsatzstoffstroms ist ein variabler Bypass vorteilhaft.

Erfindungsgemäß wird die katalytische Reaktionsstufe als Festbett- oder Wirbelschicht-oder Wanderbettreaktor ausgeführt. Andere Ausgestaltungen der erfindungsgemäßen Vorrichtung sehen vor, zur NOₓ-Entfernung eine Wäsche oder einen Festbett- oder Wirbelschicht- oder Wanderbettreaktor zu verwenden, in welchen geeignete Waschmittel, Adsorbentien und/oder Katalysatoren eingesetzt werden, durch die zumindest NOₓ aus dem Gasstrom entfernbar ist. Besonders bevorzugt werden Katalysatoren oder Waschmittel oder Adsorbentien eingesetzt, die auch in der Lage sind, Stoffe wie z. B. AsH₃ oder Hg, die als Gifte für die in der Zerlegungseinheit verwendeten Katalysatoren wirken oder die zu einer Verunreinigung des Produktstroms führen würden, aus dem olefinhaltigen Gasstrom zu entfernen.

Die katalytische Station ist zweckmäßig mit einem Katalysator gefüllt, der eine hohe Selektivität aufweist. Stoffe, die in der kryogenen Zerlegungseinheit unerwünscht sind, wie NOₓ, Acetylen und Diene, aber auch Sauerstoff und Kohlenmonoxid, werden mit Hilfe des Katalysators in Stoffe umgewandelt, welche entweder in den folgenden Reinigungsstufen leicht entfernt werden können (Wasser, Kohlendioxid) oder in der kryogenen Zerlegungseinheit bzw. im Produktstrom nicht stören. Die erwünschten Olefine hingegen werden nicht oder nur in sehr geringem Maße umgewandelt. In einer bevorzugten Ausgestaltung der erfindungsgemäßen Vorrichtung ist die katalytische Station mit einem Katalysator gefüllt, dessen Aktivität und Selektivität vom Schwefelgehalt in dem zu behandelnden Gasstrom abhängt, und welche daher regelbar ist. Besonders bevorzugt wird ein Hydrierkatalysator eingesetzt, der in der Lage ist, Stoffe wie z. B. AsH₃ oder Hg, die als Gifte für die in der Zerlegungseinheit verwendeten Katalysatoren wirken oder die zu einer Verunreinigung des Produktstroms führen würden, zu adsorbieren und so aus dem olefinhaltigen Gasstrom zu entfernen.

Eine andere Ausgestaltung der erfindungsgemäßen Vorrichtung sieht vor, vor der Zerlegungseinheit eine oder mehrere eigene Adsorberstationen anzuordnen, in welcher Katalysatorgifte wie z. B. AsH₃ oder Hg aus dem Gasstrom entfernbar sind.

Eine geeignete Größe, mit der die Aktivität des Hydrierkatalysators beurteilt werden kann, ist der Stickoxidgehalt im olefinhaltigen Gasstrom nach der Hydrierstufe, der im ppb-Bereich liegen soll, um ausreichend lange Reinigungsintervalle für die kryogenen Anlagenteile realisieren zu können. Die erfindungsgemäße Vorrichtung sieht daher den Einsatz einer geeigneten Messeinrichtung an dieser Stelle vor, wie sie beispielsweise in der Patentanmeldung 102004055120.0 beschrieben ist, mit der die NO-Konzentration in olefinhaltigen Gasströmen bis hinab in den unteren ppb-Bereich sicher erfassbar ist.

Im Anschluss an die Hydrierstufe wird der Gasstrom zu einer zweiten Sauergaswaschkolonne weitergeleitet, bei der es sich bevorzugt um eine Kaltwaschkolonne handelt. Diese Sauergaswaschkolonne ist so ausgelegt, dass die im olefinhaltigen Gasstrom noch verbliebenen Schwefelverbindungen bis hinab zu Konzentrationen von einigen ppm auswaschbar sind. Mitgerissene Flüssigkeitstropfen aus der Sauergaswaschkolonne werden zweckmäßigerweise in einem Abscheider von der Gasphase abgetrennt, bevor der Gasstrom zur nächsten Reinigungsstufe weitergeleitet wird.

Bei der nachfolgenden Reinigungsstufe handelt es sich um eine Einrichtung, mittels der Wasser und Kohlendioxid aus dem Gasstrom entfernbar sind. Eine Ausgestaltung der erfindungsgemäßen Vorrichtung sieht vor, dass es sich bei dieser Einrichtung um eine Adsorberstation handelt, welche mit einem geeigneten Adsorptionsmittel gefüllt ist.

Eine weitere Ausgestaltung der erfindungsgemäßen Vorrichtung sieht vor, geeignete Einrichtungen, mit deren Hilfe die NOₓ-Konzentration, insbesondere die Konzentration von NO, in einem olefinhaltigen Gasstrom bis in den unteren ppb-Bereich messbar ist, nicht nur unmittelbar hinter der katalytischen Reaktionsstufe anzuordnen, sondern auch hinter der kryogenen Zerlegungseinheit. Auf diese Weise ist die Menge der hochexplosiven nitrosen Harze und nitrosen Salze bilanzierbar, die sich in der kryogenen Zerlegungseinheit anreichern. Die Anlage kann solange betrieben werden, bis diese Menge einen kritischen Wert erreicht, und muss nicht schon vorsorglich nach einer wesentlich kürzeren Laufzeit abgeschaltet und gereinigt werden.

Durch die Erfindung sind Stickoxide (NO, NO₂, N₂O₂, N₂O₃, N₂O₄), Sauergase (CO₂, H₂S), Ammoniak (NH₃), Nitrile (RCN), Blausäure (HCN), Carbonylsulfid (COS), Arsenwasserstoff (AsH₃), Phosphor- und Antimonwasserstoff (PH₃, SbH₃), sonstigen Arsen-, Phosphor- oder Antimonverbindungen, Quecksilber (Hg), Acetylene, Diene, Sauerstoff (O₂), Wasser (H₂O), Kohlenmonoxid (CO), Halogene/Halogenverbindungen, Schwermetalle und anderer Schwefelverbindungen (RSH, RSR, SOₓ, Polysulfide) aus olefinhaltigen Gasen entfernbar.

## Patentansprüche

1. Verfahren zur Reinigung eines olefinhaltigen Gasstroms mit den Schritten:
- Einstellen der Konzentration einer Komponente x im Gasstrom;
- Entfernen von Stickoxiden (NOₓ) aus dem Gasstrom; und
- Entfernen der Komponente x.

2. Verfahren nach Anspruch 1, wobei x bezeichnet: Schwefelwasserstoff (H₂S) und/oder Mercaptane und/oder Sulfide und/oder Disulfide und/oder Polysulfide und/oder Arsenwasserstoff (AsH₃).

3. Verfahren nach Anspruch 1 oder 2, wobei die Entfernung des NOₓ katalytisch erfolgt.

4. Verfahren nach Anspruch 1 oder 2, wobei die Entfernung des NOₓ durch Wäsche oder adsorptiv erfolgt.

5. Verfahren nach einem der Ansprüche 1 bis 4, wobei als Katalysator ein sulfidierter Nickelkatalysator eingesetzt wird und die Komponente x H₂S und/oder eine andere schwefelhaltige Komponente ist.

6. Verfahren nach einem der Ansprüche 1 bis 5, wobei zusammen mit NOₓ auch Acetylen entfernt wird.

7. Verfahren nach einem der Ansprüche 1 bis 6, wobei der Gehalt der Komponente x vor der NOₓ-Entfernung in einer Sauergaswäsche eingestellt wird.

8. Verfahren nach einem der Ansprüche 1 bis 7, wobei die Komponente x nach der NOₓ-Entfernung durch eine Sauergaswäsche entfernt wird.

9. Verfahren nach einem der Ansprüche 1 bis 8, wobei ein oder mehrere Betriebsparameter in Abhängigkeit der nach dem NOₓ-Entfemungsschritt gemessenen NOₓ- und/oder Stickstoffmonoxid(NO)-Konzentration geregelt werden.

10. Verfahren nach einem der Ansprüche 1 bis 9, wobei ein oder mehrere Betriebsparameter in Abhängigkeit der gemessenen Olefin- und/oder Paraffin-Konzentrationen nach dem NOₓ-Entfernungsschritt geregelt werden.

11. Verfahren nach einem der Ansprühe 1 bis 10, wobei folgende Betriebsparameter geregelt werden: Temperatur des Katalysators und/oder Einstellung der Gasmenge über den Bypass zur ersten Sauergaswäsche und/oder Temperatureinstellung der Gasströme vor Eintritt in die Wäschen und/oder in das Katalysatorbett.

12. Verfahren zur Olefingewinnung mit den Schritten:
Reinigen eines Gasstroms nach einem der Ansprüche 1 bis 11;
Einspeisen des gereinigten Gasstroms in eine Tieftemperaturzerlegungseinheit; und Rektifikation des Gasstroms.

13. Vorrichtung zur Durchführung des Verfahrens nach einem der Ansprüche 1 bis 12 mit:
- einem ersten Mittel zur Einstellung der Konzentration einer Komponente x;
- einem zweiten Mittel zur Entfernung von NOₓ;
- einem dritten Mittel zur Entfernung der Komponente x.

14. Vorrichtung nach Anspruch 13, **dadurch gekennzeichnet, dass** zur katalytischen NOₓ-Entfernung ein Festbett- oder Wirbelschicht- oder Wanderbettreaktor eingesetzt wird.

15. Vorrichtung nach Anspruch 13, **dadurch gekennzeichnet, dass** zur adsorptiven NOₓ-Entfernung ein Festbett- oder Wirbelschicht- oder Wanderbettreaktor eingesetzt wird.

16. Vorrichtung nach Anspruch 13, **dadurch gekennzeichnet, dass** zur NOₓ₋Entfernung eine Wäsche eingesetzt wird.

17. Verfahren und Vorrichtung nach einem der Ansprüche 1 bis 16, wobei das Gas zuerst in eine Vorzerlegung zur Abtrennung leichter Komponenten, wie Methan und/oder Wasserstoff, eingespeist wird und danach erst der eigentlichen Olefingewinnung, wie dem Zerlegungsteil eines Steamcrackers, zugeführt wird.

18. Verfahren und Vorrichtung nach einem der Ansprüche 1 bis 17, wobei das Gas ohne eine Vorzerlegung zur Abtrennung leichter Komponenten, wie Methan und/oder Wasserstoff, direkt einer Olefingewinnung, wie beispielsweise dem Zerlegungsteil eines Steamcrackers, zugeführt wird.

19. Verfahren und Vorrichtung nach einem der Ansprüche 1 bis 18, wobei die Gasaufbereitung mit oder ohne Demethanizer und mit Olefingewinnung als eigenständige Anlage aufgebaut ist.

20. Verfahren und Vorrichtung nach einem der Ansprüche 1 bis 19, wobei aus dem olefinhaltigen Gasstrom Stickoxide (NO, NO₂, N₂O₂, N₂O₃, N₂O₄), Sauergase (CO₂, H₂S), Ammoniak (NH₃), Nitrile (RCN), Blausäure (HCN), Carbonylsulfid (COS), Arsenwasserstoff (AsH₃), Phosphor- und Antimonwasserstoff (PH₃, SbH₃), sonstige Arsen-, Phosphor- oder Antimonverbindungen, Quecksilber (Hg), Acetylene, Diene, Sauerstoff (O₂), Wasser (H₂O), Kohlenmonoxid (CO), Halogene/Halogenverbindungen, Schwermetalle und andere Schwefelverbindungen (RSH, RSR, SOₓ, Polysulfide) entfernt werden.

21. Verfahren und Vorrichtung nach einem der Ansprüche 1 bis 20, wobei die Stickoxide bis in den unteren ppb-Bereich, bevorzugt bis unter 1 ppb aus dem olefinhaltigen Gasstrom entfernt werden.
